# EUROPÄISCHE PATENTSCHRIFT

(11) **EP 1 184 963 B1**
(45) Veröffentlichungstag und Bekanntmachung des Hinweises auf die Patenterteilung: **17.11.2004**
(21) Anmeldenummer: 01116964.6
(22) Anmeldetag: 12.07.2001
(51) Int. Cl.: H02M 3/28

(54) **Hochspannungs-Gleichstromwandler**
DC-DC high voltage converter
Convertisseur courant continu - courant continu à haute tension

(30) Priorität: 09.08.2000 DE 10038814
(43) Veröffentlichungstag der Anmeldung: 06.03.2002
(73) Patentinhaber: ABB Research Ltd., 8050 Zürich (CH)
(72) Erfinder: Reinold, Harry, Dr.-Ing., 76829 Landau (DE)
(74) Vertreter: Miller, Toivo

(56) Entgegenhaltungen:
- US-A- 4 679 129
- US-A- 5 771 163
- PATENT ABSTRACTS OF JAPAN vol. 1999, no. 13, 30. November 1999 (1999-11-30) & JP 11 215841 A (TOSHIBA CORP), 6. August 1999 (1999-08-06)

## Beschreibung

Die Erfindung bezieht sich auf einen Hochspannungs-Gleichstromwandler und wird vorzugsweise auf dem Gebiet der Hochspannungs-Gleichstrom-Übertragung (HGÜ) verwendet.

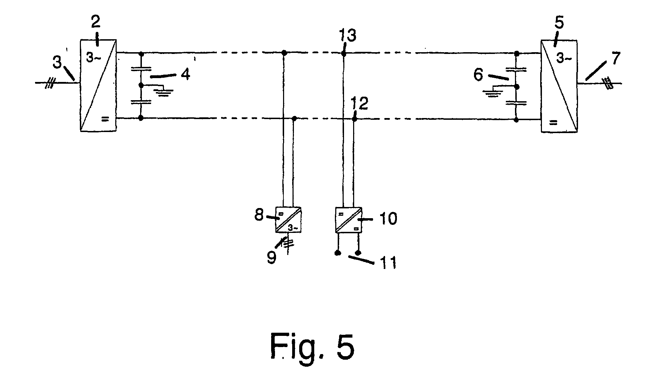

In Fig. 5 ist ein Hochspannungs-Gleichstrom-Verteilnetz mit Einspeisung(en) und Abzweigung(en) dargestellt. Die beiden Enden des Hochspannungs-Gleichstrom-Verteilnetzes 1 sind an einen Stromrichter 2 bzw. an einen Stromrichter 5 angeschlossen, wobei jeweils Stützkondensatoren 4 bzw. 6 mit geerdetem Mittelpunkt vorgesehen sind. Die beiden Stromrichter 2 bzw. 5 weisen andererseits Anschlüsse 3 bzw. 7 für Drehstromnetze auf. Der Stromrichter 2 dient vorzugsweise als Einspeise-Gleichrichter und ist hierzu mit einem Kraftwerk verbunden. Der Stromrichter 5 fungiert vorzugsweise als Wechselrichter zur Einspeisung in ein verzweigtes Versorgungsnetz.

Das Hochspannungs-Gleichstrom-Verteilnetz 1 ist des weiteren mit einem Stromrichter 8 und einem Hochspannungs-Gleichstromwandler 10 verbunden. Der Stromrichter 8 ist andererseits mit Anschlüssen 9 für ein Drehstromnetz vorzugsweise niedrigerer Spannung versehen und kann entweder als Wechselrichter zur Einspeisung aus dem Verteilnetz 1 in dieses Drehstromnetz oder als Wechselrichter zur Einspeisung aus dem Drehstromnetz in das Hochspannungs-Gleichstrom-Verteilnetz 1 fungieren.

Der Hochspannungs-Gleichstromwandler 10 ist einerseits über Anschlüsse 12, 13 mit dem Verteilnetz 1 verbunden und weist andererseits Anschlüsse 11 für ein weiteres Gleichstromnetz vorzugsweise niedrigerer Spannung (Mittelspannung) auf. Es ist zum einen möglich, den Hochspannungs-Gleichstromwandler 10 zur Speisung dieses Gleichstromnetzes (beispielsweise eines Mittelspannungs-Gleichstrom-Verteilnetzes) aus dem Hochspannungs-Gleichstrom-Verteilnetz 1 heranzuziehen. Zum anderen ist es möglich, den Hochspannungs-Gleichstromwandler 10 zur Speisung des Hochspannungs-Gleichstrom-Verteilnetzes 1 aus diesem Gleichstromnetz heranzuziehen. In letzterem Fall ist der Hochspannungs-Gleichstromwandler 10 beispielsweise an ein Solar-Kraftwerk oder eine Windkraftanlage angeschlossen.

Aus JP 11 215 841 ist ein Gleichstromwandler zusammengesetzt aus zwei primärseitigen Stromrichter und zwei sekundärseitigen Stromrichter bekannt.

Der Erfindung liegt die Aufgabe zugrunde, einen für verschiedene primärseitige und sekundärseitige Spannungsanforderungen kostengünstig herstellbaren Hochspannungs-Gleichstromwandler anzugeben.

Diese Aufgabe wird erfindungsgemäß gelöst durch einen Hochspannungs-Gleichstromwandler,
- zusammengesetzt aus mehreren primärseitigen Stromrichter-Modulen und mindestens einem sekundärseitigen Stromrichter-Modul,
- wobei die Gleichanschlüsse der primärseitigen Stromrichter-Module zwischen den Anschlüssen eines Hochspannungs-Gleichstrom-Verteilnetzes in Serie geschaltet sind,
- wobei die Gleichanschlüsse der sekundärseitigen Stromrichter-Module zwischen den Anschlüssen eines weiteren Gleichstromnetzes parallel geschaltet sind,
- wobei ein primärseitiges Stromrichter-Modul aus einer primärseitigen Stromrichter-Brücke, einem primärseitigen Kondensator, einem primärseitigen Serien-Resonanzkondensator, einem Transformator und einem sekundärseitigen Serien-Resonanzkondensator besteht und
- wobei ein sekundärseitiges Stromrichter-Modul aus einer sekundärseitigen Stromrichter-Brücke und einem sekundärseitigen Kondensator besteht.

Die mit der Erfindung erzielbaren Vorteile bestehen insbesondere darin, daß das vorgeschlagene Modulkonzept in sehr einfacher und universeller Weise eine Anpassung des Hochspannungs-Gleichstromwandlers an die vorgegebene Spannung des Hochspannungs -Gleichstrom-Verteilnetzes ermöglicht, d. h. durch die Spannung des Hochspannungs-Gleichstrom-Verteilnetzes wird die Anzahl der in Serie zu schaltenden Stromrichter-Module bestimmt. Es genügt die Konstruktion, Fertigung und Bevorratung von sehr wenigen (beispielsweise drei) unterschiedlichen Typen von Stromrichter-Modulen (mit verschiedenen Strom- Spannungs- und Leistungsdaten), um alle denkbaren Varianten auf dem Gebiet der Hochspannungs-Gleichstrom-Einspeisetechnik bzw. -Abzweigtechnik abdecken zu können.

Da die Stromrichter-Module in relativ hoher Stückzahl hergestellt werden, ergeben sich Kostenvorteile im Vergleich zu einem Lösungsansatz ohne den Einsatz von Modulen. Der zur Realisierung eines Projektes erforderliche Zeitaufwand wird erheblich reduziert. Die Ersatzteilbevorratung wird erleichtert.

Vorteilhaft ist eine synchronisierte Ansteuerung einer Serienschaltung von vielen zwischen den Hochspannungsanschlüssen angeordneten Halbleiterventilen nicht erforderlich.

Weitere Vorteile sind aus der nachstehenden Beschreibung ersichtlich.

Vorteilhafte Ausgestaltungen der Erfindung sind in den Unteransprüchen gekennzeichnet.

Die Erfindung wird nachstehend anhand der in der Zeichnung dargestellten Ausführungsbeispiele erläutert. Es zeigen:
- Fig.1: eine Grundausführung des Hochspannungs-Gleichstromwandlers,
- Fig. 2: eine vereinfachte Ausführung des Hochspannungs-Gleichstromwandlers für einen Energiefluß von der Hochspannungsseite zur Mittelspannungsseite,
- Fig. 3: eine vereinfachte Ausführung des Hochspannungs-Gleichstromwandlers für einen Energiefluß von der Mittelspannungsseite zur Hochspannungsseite,
- Fig. 4: eine vereinfachte Ausführung des Hochspannungs-Gleichstromwandlers für einen Energiefluß von der Mittelspannungsseite zur Hochspannungsseite bei relativ geringen Leistungsanforderungen,
- Fig. 5: ein Hochspannungs-Gleichstrom-Verteilnetz mit Einspeisung(en) und Abzweigung(en).

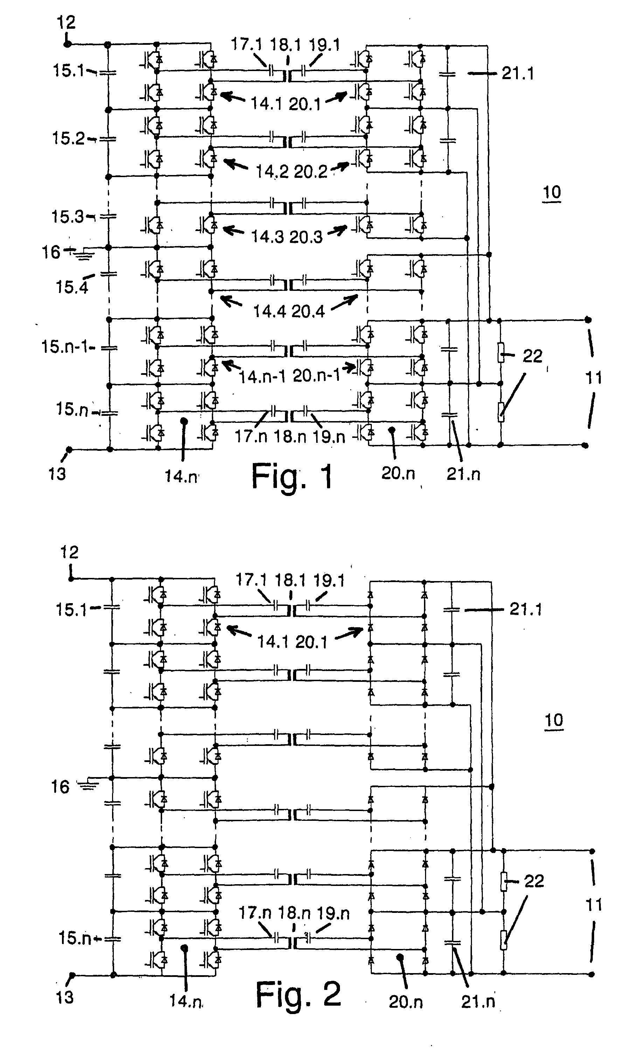

In Fig. 1 ist eine Grundausführung des Hochspannungs-Gleichstromwandlers dargestellt. Von Wichtigkeit ist die galvanische Trennung zwischen den Anschlüssen 12, 13 am Hochspannungs-Gleichstrom-Verteilnetz 1 einerseits und den mittelspannungsseitigen Anschlüssen 11 (z. B. 5 kV Spannung zwischen den Anschlüssen 11) andererseits. Diese galvanische Trennung wird durch n Transformatoren 18.1 bis 18.n bewirkt. Die Primärspulen dieser Transformatoren 18.1 bis 18.n sind mit den Wechselanschlüssen von Stromrichter-Brücken 14.1 bis 14.n verbunden, wobei die Anschlüsse über Serien-Resonanzkondensatoren 17.1 bis 17.n erfolgen. Die Gleichanschlüsse der Stromrichter-Brücken 14.1 bis 14.n liegen in Serie zwischen den Anschlüssen 12, 13, wobei jeweils ein Kondensator 15.1 bis 15.n zwischen diesen Gleichanschlüssen angeordnet ist, so daß sich eine Serien-Kondensatorschaltung zwischen beiden hochspannungsseitigen Anschlüssen 12, 13 (z. B. 70 kV Spannung zwischen den Anschlüssen 12, 13) ergibt. Der Mittelpunkt dieser Serien-Kondensatorschaltung liegt über einem Erdanschluß 16 an Masse.

Die Sekundärspulen der Transformatoren 18.1 bis 18.n sind mit den Wechselanschlüssen von Stromrichter-Brücken 20.1 bis 20.n verbunden, wobei die Anschlüsse über Serien-Resonanzkondensatoren 19.1 bis 19.n erfolgen. Jeweils zwei Stromrichter-Brücken 20.1 bis 20.n sind paarweise über ihre Gleichanschlüsse in Serie geschaltet, wobei jeweils ein Kondensator 21.1 bis 21.n zwischen diesen Gleichanschlüssen angeordnet ist. Die derart gebildeten Paare liegen über ihre äußeren Gleichanschlüsse parallel an den Anschlüssen 11. Die mittleren Anschlüsse der Paare sind miteinander verbunden. Der gemeinsame Verbindungspunkt aller mittleren Anschlüsse der Paare ist über Widerstände 22 mit den Anschlüssen 11 verbunden.

Bei der in Fig. 1 gezeigten Grundausführung des Hochspannungs-Gleichstromwandlers 10 sind sowohl die Stromrichter-Brücken 14.1 bis 14.n als auch die Stromrichter-Brükken 20.1 bis 20.n jeweils mit aktiv ein- und ausschaltbaren Halbleiterschaltern, wie IGBTs, GTOs, MOSFETs in den vier Brückenzweigen bestückt. Dies erlaubt eine optimale Steuerung/Regelung des Energieflusses bzw. Stromflusses sowohl vom Hochspannungs-Gleichstrom-Verteilnetz 1 zu den mittelspannungsseitigen Anschlüssen 11 als auch umgekehrt von den Anschlüssen 11 zum Hochspannungs-Gleichstrom-Verteilnetz 1. Die aktiv ein- und ausschaltbaren Halbleiterschalter werden vorzugsweise mit einer relativ hohen Schaltfrequenz im Bereich 2 bis 10 kHz betrieben, was vorteilhaft die Baugröße der Transformatoren im Vergleich zu einer Betriebsweise mit niedriger Frequenz reduziert. Für den Betrieb wird vorzugsweise eine Kombination aus Zero Current Switching (ZCS) und Zero Voltage Switching (ZVS) eingesetzt.

Wie aus Fig. 1 zu erkennen ist, setzt sich der Hochspannungs-Gleichstromwandler 10 aus n Stromrichter-Modulen zusammen, welche jeweils als Serien-Resonanz-DC/DC-Stromrichter ausgebildet sind und betrieben werden. Ein derartiges Stromrichter-Modul besteht allgemein aus einer primärseitigen Stromrichter-Brücke 14.n, einem primärseitigen Kondensator 15.n, einem primärseitigen Serien-Resonanzkondensator 17.n, einem Transformator 18.n, einer sekundärseitigen Stromrichter-Brücke 20.n, einem sekundärseitigen Kondensator 21.n und einem sekundärseitigen Serien-Resonanzkondensator 19.n. In Abhängigkeit der in den Stromrichter-Brücken eingesetzten Halbleiterschalter ist ein Stromrichter-Modul für die Beaufschlagung mit einer bestimmten maximalen Spannung (Modulspannung) - beispielsweise 2,5 kV - geeignet.

Vorteilhaft ist ein Transformator lediglich für die Modulspannung, d. h. beispielsweise 2,5 kV, zu isolieren. Das Übersetzungsverhältnis zwischen Primär- und Sekundärwicklung beträgt vorzugsweise etwa 1:1. Der Transformator kann sehr kompakt und streuarm aufgebaut werden, was allgemein für resonante DC/DC-Stromrichter von großem Vorteil ist.

Diese n Stromrichter-Module sind allgemein primärseitig zwischen den Anschlüssen 12, 13 des Hochspannungs-Gleichstrom-Verteilnetzes in Serie und sekundärseitig zwischen den Anschlüssen 11 des weiteren Gleichstromnetzes parallel geschaltet. Da die Spannung dieses weiteren Gleichstromnetzes jedoch für die Halbleiterschalter eines einzigen Stromrichter-Moduls zu hoch ist, sind jeweils zwei Stromrichter-Module sekundärseitig zunächst in Serie geschaltet, wie in Fig. 1 gezeigt.

Wie leicht zu erkennen ist, ermöglicht das vorgeschlagene Modulkonzept in sehr einfacher und universeller Weise eine Anpassung des Hochspannungs-Gleichstromwandlers 10 an die vorgegebene Spannung des Hochspannungs-Gleichstrom-Verteilnetzes 1, d. h. durch die Spannung des Hochspannungs-Gleichstrom-Verteilnetzes 1 wird die Anzahl der in Serie zu schaltenden Stromrichter-Module bestimmt. Beträgt die Spannung des Hochspannungs-Gleichstrom-Verteilnetzes 1 beispielsweise 70 kV, so sind achtundzwanzig primärseitige Stromrichter-Module in Serie vorzusehen, wenn ein Halbleiterschalter für eine Sperrspannung von 2,5 kV ausgelegt ist.

In Fig. 2 ist eine vereinfachte Ausführung des Hochspannungs-Gleichstromwandlers 10 dargestellt, welche lediglich einen Energiefluß bzw. Stromfluß vom Hochspannungs-Gleichstrom-Verteilnetz 1 zu den Anschlüssen 11 (von der Hochspannungsseite zur Mittelspannungsseite) ermöglicht. Bei dieser vereinfachten, zur Speisung eines Mittelspannungs-Gleichstrom-Verteilnetzes geeigneten Ausführung sind die Stromrichter-Brücken 20.1 bis 20.n jeweils mit Dioden in den vier Brückenzweigen bestückt. Die übrige Schaltung ist unverändert zur Ausführungsform nach Fig. 1.

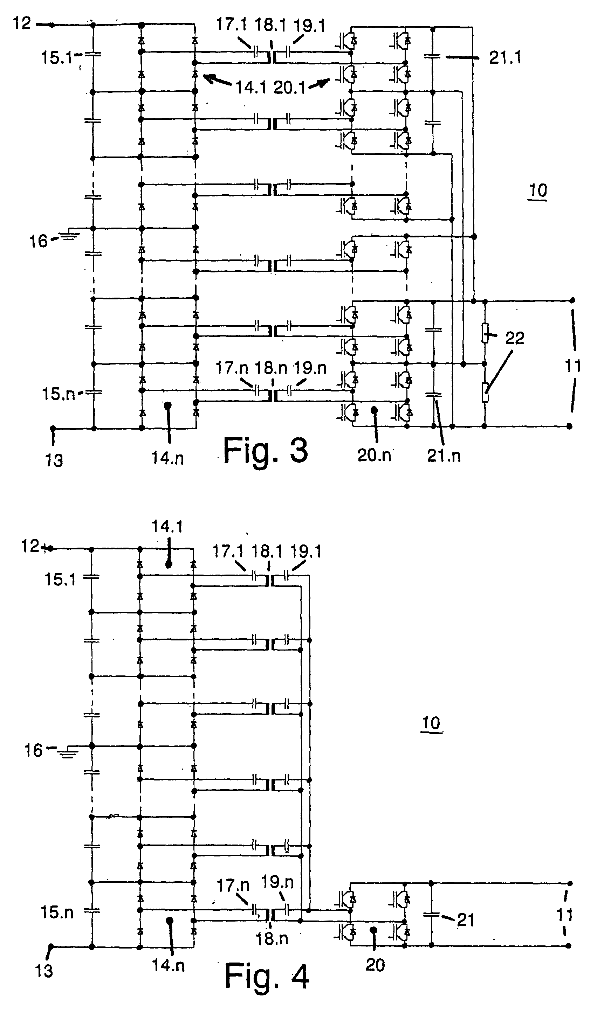

In Fig. 3 ist eine vereinfachte Ausführung des Hochspannungs-Gleichstromwandlers 10 dargestellt, welche lediglich einen Energiefluß bzw. Stromfluß von den Anschlüssen 11 zum Hochspannungs-Gleichstrom-Verteilnetz 1 (von der Mittelspannungsseite zur Hochspannungsseite) ermöglicht. Bei dieser zur Einspeisung aus einem Mittelspannungs-Gleichstrom-Verteilnetz oder zur Einspeisung aus einer Mittelspannungs-Energiequelle - beispielsweise relativ große Windkraftanlagen oder Solar-Kraftwerke - geeigneten vereinfachten Ausführung sind die Stromrichter-Brücken 14.1 bis 14.n jeweils mit Dioden in den vier Brückenzweigen bestückt. Die übrige Schaltung ist unverändert zur Ausführungsform nach Fig. 1.

In Fig. 4 ist eine vereinfachte Ausführung des Hochspannungs-Gleichstromwandlers 10 dargestellt, welche lediglich einen Energiefluß bzw. Stromfluß von den Anschlüssen 11 zum Hochspannungs-Gleichstrom-Verteilnetz 1 (von der Mittelspannungsseite zur Hochspannungsseite) bei relativ geringen Leistungsanforderungen ermöglicht. Bei dieser zur Einspeisung aus einem Mittelspannungs-Gleichstrom-Verteilnetz oder zur Einspeisung aus einer Mittelspannungs-Energiequelle - beispielsweise relativ kleine Windkraftanlagen oder Solar-Kraftwerke - geeigneten vereinfachten Ausführung sind die Stromrichter-Brücken 14.1 bis 14.n jeweils mit Dioden in den vier Brückenzweigen bestückt. Alle Sekundärspulen der Transformatoren 18.1 bis 18.n sind parallel mit den Wechselanschlüssen einer einzigen Stromrichter-Brücke 20 verbunden, wobei die Anschlüsse über Resonanzkondensatoren 19.1 bis 19.n erfolgen. Die Gleichanschlüsse der Stromrichter-Brücke 20 bilden die Anschlüsse 11, zwischen denen ein Kondensator 21 angeordnet ist. Die Stromrichter-Brücke 20 ist mit aktiv ein- und ausschaltbaren Halbleiterschaltern, wie IGBTs, GTOs, MOSFETs in den vier Brückenzweigen bestückt. Die übrige Schaltung ist unverändert zur Ausführungsform nach Fig. 1.

## Patentansprüche

1. Hochspannungs-Gleichstromwandler, zusammengesetzt aus mehreren primärseitigen Stromrichter-Brücken (14.n), mehreren primärseitigen Kondensatoren (15.n), mehreren Transformatoren (18.n), mindestens einer sekundärseitigen Stromrichter-Brücke (20.n) und mindestens einem sekundärseitigen Kondensator (21.n), wobei die Gleichanschlüsse der primärseitigen Stromrichter-Brücken (14.n) zwischen den Anschlüssen (12, 13) eines Hochspannungs-Gleichstrom-Verteilnetzes (1) in Serie geschaltet sind und wobei die Gleichanschlüsse der sekundärseitigen Stromrichter-Brücken (20.n) zwischen den Anschlüssen (11) eines weiteren Gleichstromnetzes parallel geschaltet sind, **dadurch gekennzeichnet, dass** sich der Hochspannungs-Gleichstromwandler aus mehreren (n) primärseitigen Stromrichter-Modulen und mindestens einem sekundärseitigen Stromrichter-Modul zusammensetzt, wobei ein primärseitiges Stromrichter-Modul aus
• einer primärseitigen Stromrichter-Brücke (14.n),
• einem primärseitigen Kondensator (15.n),
• einem primärseitigen Serien-Resonanzkondensator (17.n),
• einem Transformator (18.n) und
• einem sekundärseitigen Serien-Resonanzkondensator (19.n) besteht,
und wobei ein sekundärseitiges Stromrichter-Modul aus
• einer sekundärseitigen Stromrichter-Brücke (20.n) und
• einem sekundärseitigen Kondensator (21.n) besteht.

2. Hochspannungs-Gleichstromwandler nach Anspruch 1, **dadurch gekennzeichnet, daß** sowohl die primärseitigen Stromrichter-Brücken (14.n) als auch die mindestens eine sekundärseitige Stromrichter-Brücke (20.n) mit aktiv ein- und ausschaltbaren Halbleiterschaltern bestückt sind.

3. Hochspannungs-Gleichstromwandler nach Anspruch 1, **dadurch gekennzeichnet, daß** die primärseitigen Stromrichter-Brücken (14.n) mit aktiv ein- und ausschaltbaren Halbleiterschaltern bestückt sind und die mindestens eine sekundärseitige Stromrichter-Brücke (20.n) mit Dioden bestückt ist.

4. Hochspannungs-Gleichstromwandler nach Anspruch 1, **dadurch gekennzeichnet, daß** die primärseitigen Stromrichter-Brücken (14.n) mit Dioden bestückt sind und die mindestens eine sekundärseitige Stromrichter-Brücke (20.n) mit aktiv ein- und ausschaltbaren Halbleiterschaltern bestückt ist.

## Claims

1. High-voltage DC/DC converter, comprising a number of primary-side converter bridges (14.n), a number of primary-side capacitors (15.n), a number of transformers (18.n), at least one secondary-side converter bridge (20.n) and at least one secondary-side capacitor (21.n), with the equivalent connections of the primary-side converter bridges (14.n) being connected in series between the connections (12, 13) of a high-voltage DC distribution network (1), and with the equivalent connections of the secondary-side converter bridges (20.n) being connected in parallel between the connections (11) of a further DC network, **characterized in that** the high-voltage DC/DC converter comprises a number (n) of primary-side converter modules and at least one secondary-side converter module,
with a primary-side converter module comprising
• a primary-side converter bridge (14.n),
• a primary-side capacitor (15.n),
• a primary-side series resonant capacitor (17.n),
• a transformer (18.n) and
• a secondary-side series resonant capacitor (19.n),
and with a secondary-side converter module comprising
• a secondary-side converter bridge (20.n) and
• a secondary-side capacitor (21.n).

2. High-voltage DC/DC converter according to Claim 1, **characterized in that** both the primary-side converter bridges (14.n) and the at least one secondary-side converter bridge (20.n) are fitted with semiconductor switches which can be switched on and off actively.

3. High-voltage DC/DC converter according to Claim 1, **characterized in that** the primary-side converter bridges (14.n) are fitted with semiconductor switches which can be switched on and off actively, and the at least one secondary-side converter bridge (20.n) is fitted with diodes.

4. High-voltage DC/DC converter according to Claim 1, **characterized in that** the primary-side converter bridges (14.n) are fitted with diodes, and the at least one secondary-side converter bridge (20.n) is fitted with semiconductor switches which can be switched on and off actively.

## Revendications

1. Convertisseur de courant continu à haute tension, comprenant plusieurs ponts de convertisseur (14.n) côté primaire, plusieurs condensateurs (15.n) côté primaire, plusieurs transformateurs (18.n), au moins un pont de convertisseur (20.n) côté secondaire et au moins un condensateur (21.n) côté secondaire, les bornes de courant continu des ponts de convertisseur (14.n) côté primaire étant connectées en série entre les bornes (12, 13) d'un réseau de distribution de courant continu à haute tension (1) et les bornes de courant continu des ponts de convertisseur (20.n) côté secondaire étant connectées en parallèle entre les bornes (11) d'un autre réseau de courant continu, **caractérisé par le fait que** le convertisseur de courant continu à haute tension se compose de plusieurs (n) modules de convertisseur côté primaire et d'au moins un module de convertisseur côté secondaire, un module de convertisseur côté primaire étant constitué par
• un pont de convertisseur (14.n) côté primaire,
• un condensateur (15.n) côté primaire,
• un condensateur résonant série ( 17.n) côté primaire,
• un transformateur (18.n) et
• un condensateur résonant série (19.n) côté secondaire,
et un module de convertisseur côté secondaire étant constitué par
• un pont de convertisseur (20.n) côté secondaire, et
• un condensateur (21.n) côté secondaire.

2. Convertisseur de courant continu à haute tension selon la revendication 1, **caractérisé par le fait que** aussi bien les ponts de convertisseur (14.n) côté primaire que le pont de convertisseur (20.n) côté secondaire, au nombre d'au moins un, sont équipés de commutateurs à semi-conducteurs pouvant être mis sous tension et hors tension de manière active.

3. Convertisseur de courant continu à haute tension selon la revendication 1, **caractérisé par le fait que** les ponts de convertisseur (14.n) côté primaire sont équipés de commutateurs à semi-conducteurs pouvant être mis sous tension et hors tension de manière active, et le pont de convertisseur (20.n) côté secondaire, au nombre d'au moins un, est équipé de diodes.

4. Convertisseur de courant continu à haute tension selon la revendication 1, **caractérisé par le fait que** les ponts de convertisseur (14.n) côté primaire sont équipés de diodes, et le pont de convertisseur (20.n) côté secondaire, au nombre d'au moins un, est équipé de commutateurs à semi-conducteurs pouvant être mis sous tension et hors tension de manière active.
